# EUROPEAN PATENT SPECIFICATION

(11) **EP 2 975 922 B1**
(45) Date of publication and mention of the grant of the patent: **22.02.2017**
(21) Application number: 13712191.9
(22) Date of filing: 20.03.2013
(51) Int. Cl.: A01B 1/22, B25F 1/02, B25G 3/18

(54) **COVER MEMBER FOR A WORKING IMPLEMENT OF A TOOL**
BEDECKUNG FÜR EIN ARBEITSGERÄT EINES WERKZEUGS
COUVERTURE D'UN TRAVAIL EN OEUVRE D'UN OUTIL

(43) Date of publication of application: 27.01.2016
(73) Proprietor: Husqvarna AB, 56182 Huskvarna (SE)
(72) Inventor: KOHL, Peter, 89257 Illertissen (DE); NILSSON, Fredrik, S-112 61 Stockholm (SE); NÄSLUND, Jens, 163 56 Spånga (SE); BROBEIL, Achim, 89160 Dornstadt (DE); WANNENWETSCH, Christian, 89182 Bernstadt (DE)
(74) Representative: Finkele, Rolf
(86) International application number: PCT/EP2013/055809
(87) International publication number: WO 2014/146705

(56) References cited:
- EP-A1- 1 900 267
- DE-U1- 20 020 475
- GB-A- 1 574 157
- US-A- 5 425 226
- US-A1- 2011 303 055

## Description

### TECHNICAL FIELD

The present invention relates to a tool, and more particularly to a cover member for a working implement of the tool.

### BACKGROUND

Tools including an extension handle detachably coupled with a working implement are well known in the art. The working implements may be attached to a male connector, while the extension handle may be attached to a female connector configured to receive the male connector. The male connector may include a locking portion. Further, a locking member may be provided on the female connector. The male connector is coupled to the female connector in order to attach the extension handle to the working implement. The locking member may be then actuated to engage with the locking portion of the male connector.

However, the working implement may have to occasionally used with a short handle. The extension handle may then have to be removed from the working implement by disengaing the locking member from the locking portion. The male connector and the female connector are then detached from each other. Further, a short handle including a female connector has to be provided separately. The short handle is then coupled to the working implement as in the case of the extension handle. Further, in order to use the working implement with the extension handle, the short handle has to be removed again. This may increase a cost, design and manufacutring complexity. Repeated detachment and attachment of the extension handle and the short handle may also be inconvenient for the user.

During usage of the tool, the actuating member may contact obstacles, such as, branches. This may result in unintenional actuation of the actuating member such that the male connector and the female connector get detached from each other. Consequently, the working implement may get detached from the extension handle and fall downwards. The working implement may get damaged or may cause harm to the user.

Therefore, in light of the foregoing, there is a need for an improved tool.

US5425226 discloses a tool comprising a working implement, handle and a coupling apparatus.

### SUMMARY

In view of the above, it is an objective of the present invention to solve or at least reduce the problems discussed above. The objective is at least partially achieved according to a tool, according to an embodiment of the present invention. The tool includes a working implement, a handle and a coupling apparatus configured to detachably couple the working implement to the handle. The coupling apparatus includes a first connecting portion attached to the working implement, the first connecting portion comprising a recess; and a second connecting portion attached to the handle, the second connecting portion being configured to at least partly receive the first connecting portion. The coupling apparatus further includes a locking member disposed on the second connecting portion, the locking member being configured to engage with the recess of the first connecting portion to detachably couple the handle to the working implement. The locking member includes an actuating member, the actuating member at least partly projecting from an outer surface of the handle and/or second connecting portion. A cover member is configured to at least partly enclose the first connecting portion proximate to the recess. The cover member is further configured to at least partly enclose the handle and/or the second connecting portion when the handle is detachably coupled to the working implement. The cover member may prevent the coupling apparatus to come in contact with obstacles, such as, branches during usage of the tool.

The cover member includes an opening, the opening being configured to allow access to the actuating member. The opening may facilitate manual actuation of the actuating member after the first connecting portion is at least partly received within the second connecting portion.

According to an embodiment, the cover member further includes a safety member, the safety member being configured to at least partly enclose the handle and/or the second connecting portion proximate to a handle side of the actuating member. The handle side of the actuating member is opposite to that side of the actuating member facing the working implement. The safety member may therefore prevent the handle to completely detach from the working implement even after at least partial disengagement of the locking member from the recess of the first connecting portion.

According to an embodiment, the safety member includes a body and a connecting portion, the connecting portion being configured to be detachably connected to the cover member. The body is configured to at least partly enclose the handle and/or the second connecting portion proximate to the handle side of the actuating member when the connecting portion is detachably connected to the cover member.

According to an embodiment, the connecting portion includes one of at least one aperture, at least one hook, or at least one rib configured to detachably engage with one of a projection, an aperture, or a groove of the cover member. Thus the engagement and disengagement between the safety member and the cover member can be manually done by a user without the need to use any tool.

According to a further embodiment, the body is shaped to conform at least partly to an outer surface of the actuating member. This adds further safety functionality to the safety member as it further restricts unintentional movement of the actuating member.

According to an embodiment, the safety member further includes a strap, the strap being configured to detachably connect the body to the cover member. According to an alternative embodiment, the safety member is a strap.

According to an embodiment, the safety member is pivotably connected to the cover member at one or more pivot points. According to a further embodiment, the one or more pivot points are located vertically between the first connecting portion and the actuating member. The location of the pivot points may cause a force exerted on the safety member by the actuating member to reinforce a position of the safety member at which the safety member at least partly encloses the handle and/or the second connecting portion proximate to a handle side of the actuating member.

According to an embodiment, the cover member further comprises a protruding portion, the protruding portion being proximate to a side of the actuating member facing the working implement in case the handle and/or second connecting portion is detachable coupled to the working implement. The protruding portion may prevent the actuating member to come in contact with obstacles, such as, branches during usage of the tool. Thus, an unintentional actuation of the actuating member may be avoided. Consequently, any accidental disengagement of the locking member from the recess of the first connecting portion may be prevented. The working implement may be therefore securely coupled to the handle during usage of the tool.

According to a further embodiment, the cover member is configured as a short handle. Thus, to use the working implement with the cover member as the short handle, the handle needs to be just detached from the working implement.

According to an embodiment, the first connecting portion further includes an implement attachment portion, the implement attachment portion being attached to the working implement. The cover member further includes an extension portion, the extension portion being configured to partially enclose the implement attachment portion,

According to an embodiment, a closing member is detachably coupled to the extension portion of the cover member.

According to an embodiment, the first connecting portion further includes gripping portions, the gripping portions being configured to detachably engage with the cover member. According to an alternative embodiment, the cover member is integral with the first connecting portion.

According to an embodiment, multiple working implements are exchangeably coupled to the first connecting portion.

### BRIEF DESCRIPTION OF THE DRAWINGS

The invention will be described in more detail with reference to the enclosed drawings, wherein:
FIG. **1** illustrates a partially assembled perspective view of a tool, according to an embodiment of the present invention;
FIG. **2** illustrates a perspective view of a cover member of the tool with a safety member in an open position, according to an embodiment of the present invention;
FIG. **3** illustrates a perspective view of the cover member of the tool with the safety member in a closed position, according to the embodiment of FIG. **2**;
FIG. **4** illustrates a side view of the cover member, according to the embodiment of FIG. **2****;**
FIG. **5** illustrates a side sectional view of the cover member, according to an embodiment of the present invention;
FIG. **6** illustrates a top sectional view of the cover member, according to the embodiment of FIG. **5****;**
FIG. **7** illustrates a detailed sectional view of the cover member, according to the embodiment of FIG. **6**
FIG. **8** illustrates a front sectional view of the cover member, according to the embodiment of FIG **7****;**
FIG. **9** illustrates a perspective view of the tool with a working implement and a handle detachably coupled to each other, according to the embodiment of FIG. **1****;**
FIG. **10** illustrates a perspective view of the tool with the safety member in the closed position, according to the embodiment of FIG. 1; and
FIG. **11** illustrates a perspective view of the tool, according to a further embodiment of the present invention; and
FIG. **12** illustrates a top sectional view of the cover member, according to an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention can be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "lateral", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

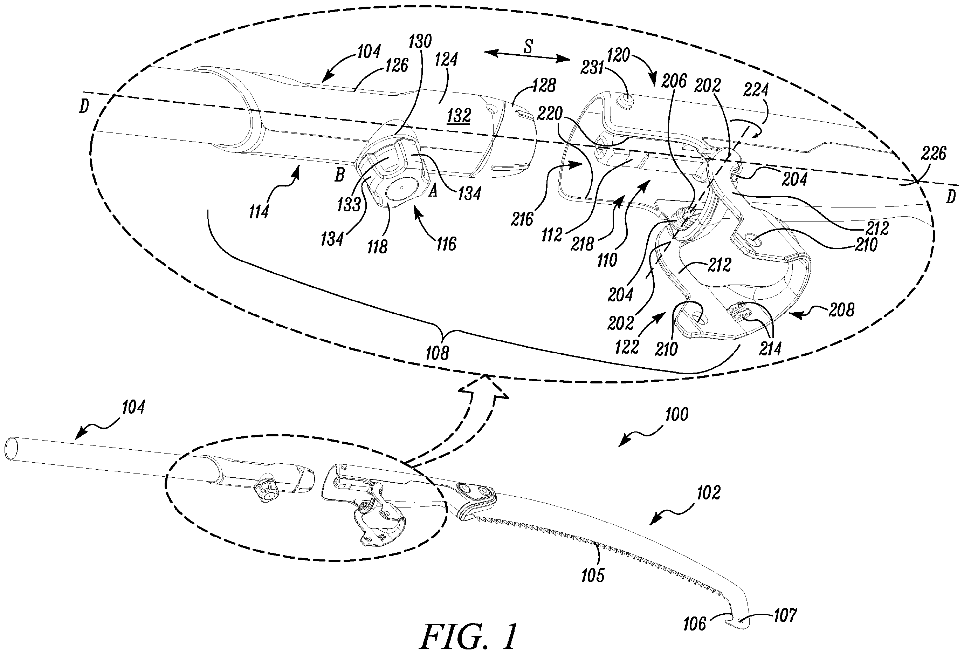

FIG. **1** illustrates a partially assembled view of a tool **100,** according to an embodiment of the present invention. The tool **100** includes a working implement **102** and a handle **104.** In an embodiment, the working implement **102** may be a saw with a cutting edge **105** and a hooked end **106.** The cutting edge **105** may be serrated. Further, the hooked end **106** includes an eyelet **107** that may be used for suspending the working implement **102** from a support. Moreover, the working implement **102** may be curved. The working implement **102** may be used for cutting branches and/or twigs. Further, the handle **104** may be substantially cylindrical tube. However, the handle **104** may be of any other cross-section, for example, elliptical, polygonal, or the like within the scope of the present invention. The handle **104** may be an extension handle for the working implement **102.**

A coupling apparatus **108** detachably couples the working implement **102** to the handle **104.** In an embodiment, the coupling apparatus **108** includes a first connecting portion **110** attached to the working implement **102.** Further, the first connecting portion **110** includes a recess **112.** The coupling apparatus **108** further includes a second connecting portion **114** attached to the handle **104.** The second connecting portion **114** is configured to at least partly receive the first connecting portion **110.**

Further, a locking member **116** is disposed on the second connecting portion **114.** The locking member **116** is configured to detachably engage with the recess **112** of the first connecting portion **110** in order to removably couple the handle **104** to the working implement **102.** Further, the locking member **116** includes an actuating member **118.** In an embodiment, the locking member **116** may be a screw which may be rotated by the actuating member **118** in a closing direction such that the screw may detachably engage with the recess **112** of the first connecting portion **110.** In an embodiment, a cover member **120** at least partly encloses the first connecting portion **110** proximate the recess **112.** In an embodiment, the cover member **120** includes a safety member **122.**

In an embodiment, the second connecting portion **114** includes a sleeve member **124.** The sleeve member **124** may enclose at least partly enclose a portion of the handle **104** proximate an end of the handle **104** facing the cover member **120.** Further, the sleeve member **124** includes an open portion **126** such that a portion of the handle **104** is exposed through the open portion **126.** The second connecting portion **114** also includes an end member **128.** In an embodiment, the end member **128** may be configured as an insert that may partially extend into the handle **104.** The end member **128** may include a channel (not shown) that at least partially receives the first connecting portion **110.** Further, the locking member **116** may be inserted into a projecting region **130** of the sleeve member **124.** The locking member **116** may extend through aligned apertures (not shown) of the projecting region **130,** the handle **104** and the end member **128.** The end member **128** may also limit an insertion of the first connecting portion **110** into the channel. This may align the recess **112** with the locking member **116** when the first connecting portion **110** is at least partly inserted into the end member **128** till the permissible limit. Further, the actuating member **118** may at least partly project from an outer surface **132** of the sleeve member **124.** In an embodiment, the actuating member **118** includes an inner portion **133** that may be coupled to the locking member **116.** The projecting region **130** of the sleeve member **124** may be substantially cylindrical and at least partly encloses the inner portion **133.**

Further, the actuating member **118** includes extensions **134** that extend towards an outer surface of the inner portion **133.** The extensions **134** may facilitate gripping during manual rotation of the actuating member **118.** As illustrated in FIG. **1****,** a working implement side **A** of the actuating member **118** faces the working implement **102.** The actuating member **118** may therefore function as a knob for rotating the locking member **116.** Further, a handle side **B** of the actuating member **118** is opposite to the side **A,** the handle side **B** facing the handle **104.**

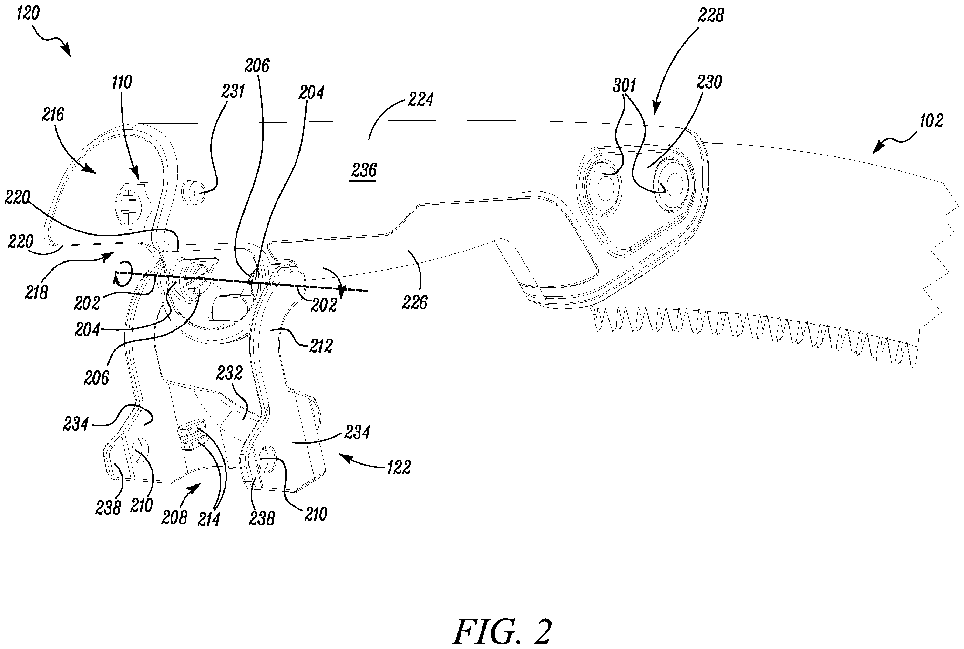

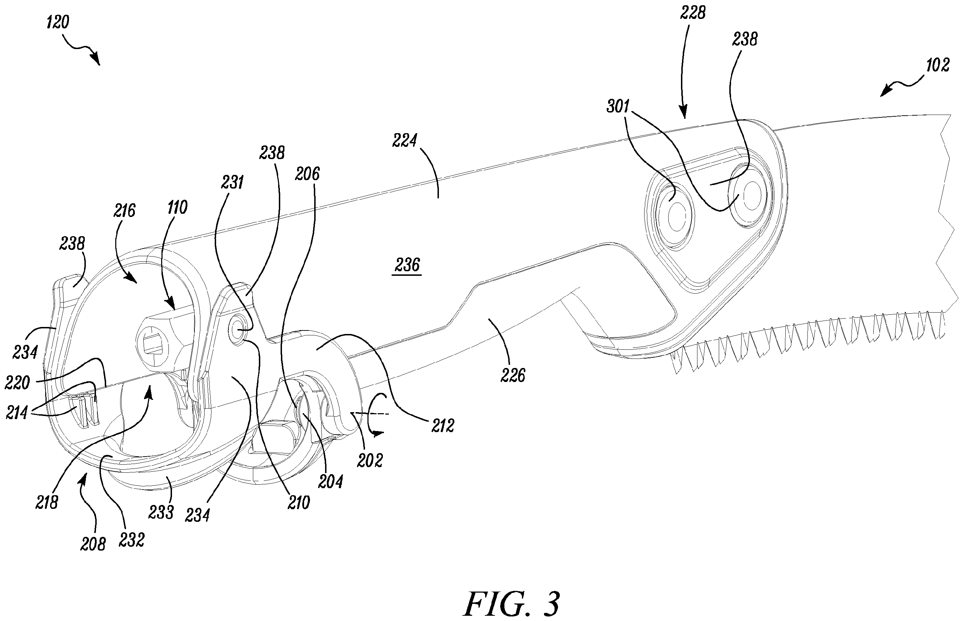

FIGS. **2** and **3** illustrate perspective views of the cover member **120,** according to an embodiment of the present invention. As illustrated in FIG. **2****,** the safety member **122** is pivotably connected to the cover member **120** at pivot points **202.** The safety member **122** is therefore pivotable about the pivot points **202.** Further, the safety member **122** is in an open position. In the open position, the safety member **122** may be pivotably suspended from the cover member **120** with no other connection between the safety member **122** and the cover member **120.** The cover member **120** includes pivot portions **204** that receive fastening portions **206** of the safety member **122.** However, in alternate embodiments, a separate fastening member (not shown) may provide a pivotable coupling between the safety member **122** and the cover member **120.** The safety member **122** further includes a body **208,** connecting portions **210** and two arms **212.** The two arms **212** extend from the body **208** to the pivot points **202.** Further, the body **208** includes protrusions **214** on an inner surface. The protrusions **214** may be on both sides (only shown on one side) of the body **208.** Each of the protrusions **214** may have an extended end that tapers towards the opposite end of the protrusion **214.**

The cover member **120** includes a first opening **216** and a second opening **218.** The first opening **216** may be an end opening while the second opening **218** may be a lateral opening adjacent to the first opening **216.** The first opening **216** may enable at least a partial insertion of the second connecting portion **114** along with the handle **104** into the cover member **120** along a sliding direction **S.** Further, the second opening **218** may be delimited laterally by two straight edges **220.** The cover member **120** further includes a first portion **224** and a second portion **226.** In an embodiment, each of the first portion **224** and/or the second portion **226** may have two halves attached to each other. Each half may be connected to each other using adhesives, mechanical couplings (E.g., snap-fit connections), fasteners, or the like. The first portion **224** and/or the second portion **226** may be shaped in order to facilitate grasping. Further, the first portion **224** and/or the second portion **226** may be made of a material or have a texture in order to improve a grip on the cover member **120.** Therefore, the cover member **120** may be configured as a short handle.

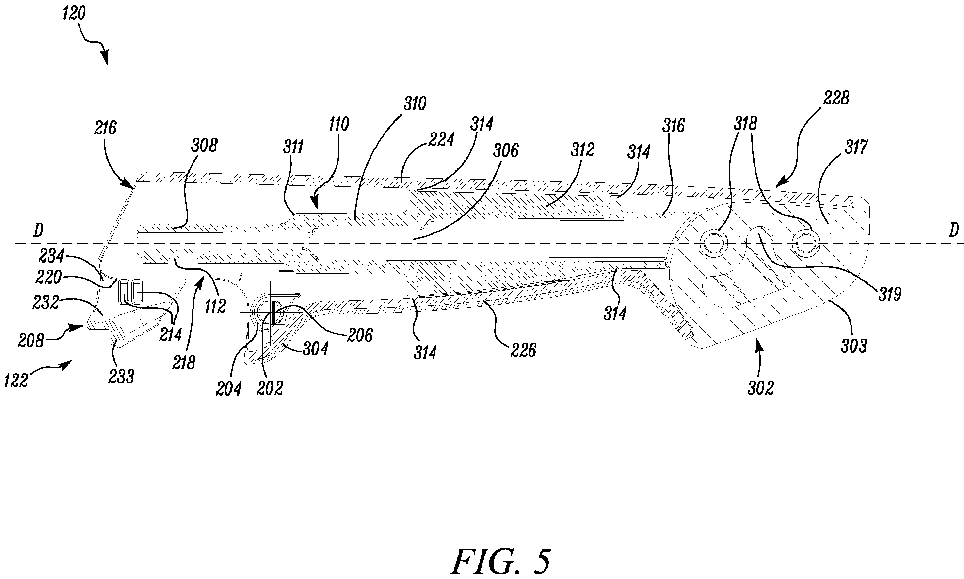

In an embodiment, the cover member **120** includes an extension portion **228.** The extension portion **228** and the first opening **216** may be at opposite ends of the cover member **120.** The first portion **224** may include a first indentation **230** in the extension portion **228.** In an embodiment, the extension portion **228** may at least partially enclose an implement attachment portion (shown in FIGS. **5 - 8****)** of the working implement **102.**

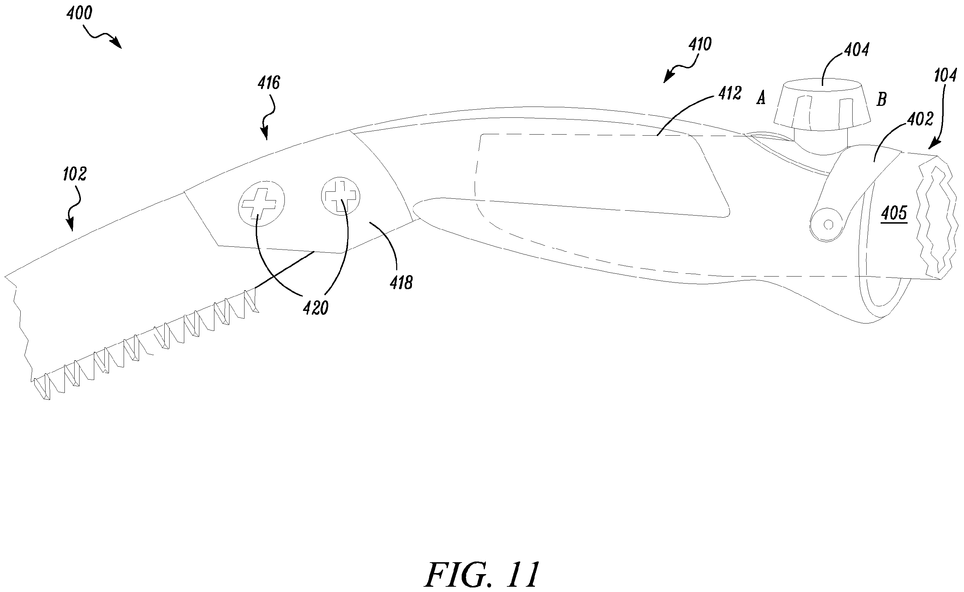

FIG. **3** illustrates a closed position of the safety member **122.** The safety member **122** is pivoted about the pivot points **202** from the open position (illustrated in FIG. **2****)** to reach the closed position. In the closed position, the connecting portions **210** of the safety member **122** detachably engage with projections **231** of the cover member **120.** In an embodiment, the connecting portions **210** and the projections **231** may form a snap-fit connection. The connecting portions **210** are embodied as apertures in FIGS. **2** and **3****.** However, in various alternative embodiments, the connecting portions **210** of the safety member **122** may include one of at least one hook, at least one rib, or the like (not shown) configured to detachably engage with one of at least one aperture, at least one groove, or the like, respectively, of the cover member **120.** In another embodiment, the safety member **122** may include a strap (not shown) that is configured to detachably connect the body **208** to the cover member **120.** The strap may be a Velcro strap. In yet another embodiment, the safety member **122** may be a strap (described with reference to FIG. **11****).** The extended end of each of the protrusions **214** may also engage with the straight edges **220** (only with one straight edge **220** is shown) of the cover member **120** in the closed position. The protrusions **214** may help in fixing the closed position of the safety member **122** and prevent any pivoting of the safety member **122** beyond the closed position.

Further, the body **208** includes a middle portion **232** and two lateral portions **234** on both sides of the middle portion **232.** The middle portion **232** includes an extended region **233.** The extended region **233** extends from the middle portion **232** and has a curved shape. The arms **212** extend from the lateral portions **234.** Further, the protrusions **214** may be disposed on proximate to a boundary between the middle portion **232** and each of the lateral portions **234.** Moreover, the connecting portions **210** may be disposed on the lateral portions **234.** In an embodiment, the lateral portions **234** may be shaped to at least partly conform to an outer surface **236** of the first portion **224** of the cover member **120.** End region **238** of each of the lateral portions **234** may be inclined away from the outer surface **236** of the first portion **224.** This allows for a better grip during manual engagement or disengagement of the safety member **122** with the cover member **120.**

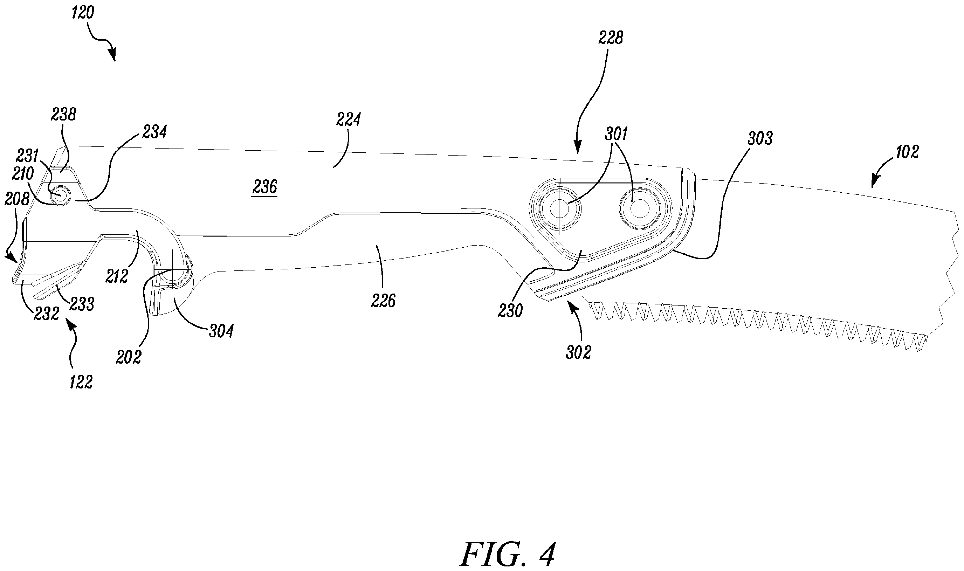

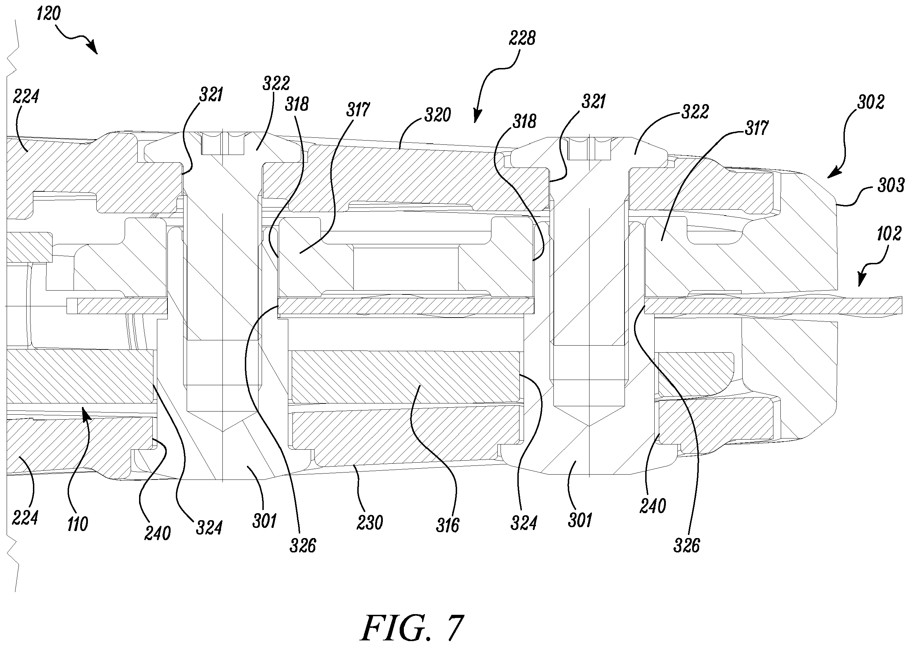

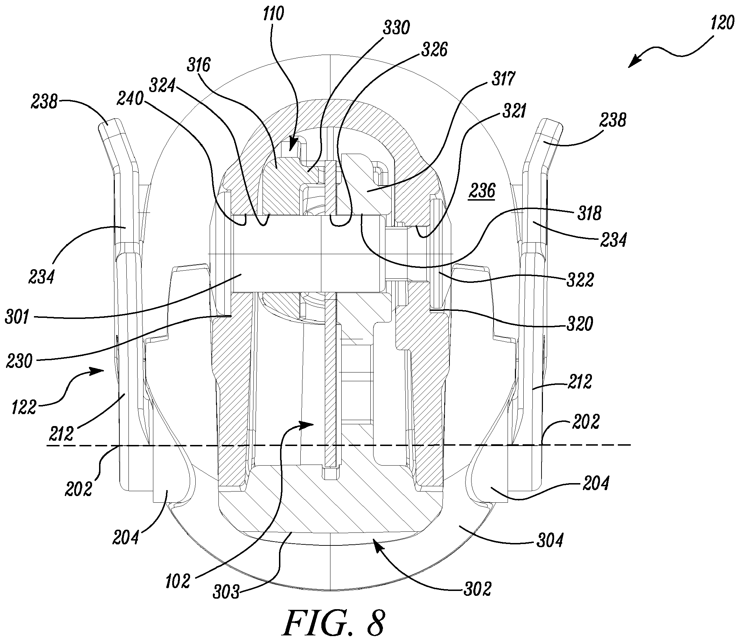

FIG. **4** illustrates a side view of the cover member **120,** according to the embodiment of FIG. **3****.** As illustrated in FIG. **4****,** the first portion **224** extends downwards in the extension portion **228** of the cover member **120.** Further, the first indentation **230** in the extension portion **228** includes two apertures (shown in FIGS. **7** and **8****)** that are configured to receive two bushings **301.** In an embodiment, the first portion **224** may include a second indentation (shown in FIGS. **7** and **8****)** on an opposite side of the first indentation **230.** The extension portion **228** includes a receiving member **302** that at least partly receives the working implement **102.** The receiving member **302** may be coupled to the first portion **224.** Further, an edge **303** of the receiving member **302** may be inclined upwards and then become substantially straight. The edge **303** may include one or more chamfers (not shown). The cover member **120** further includes a protruding portion **304.** The protruding portion **304** may be part of the second portion **226** of the cover member **120.** The pivot points **202** may be located adjacent to the protruding portion **304.**

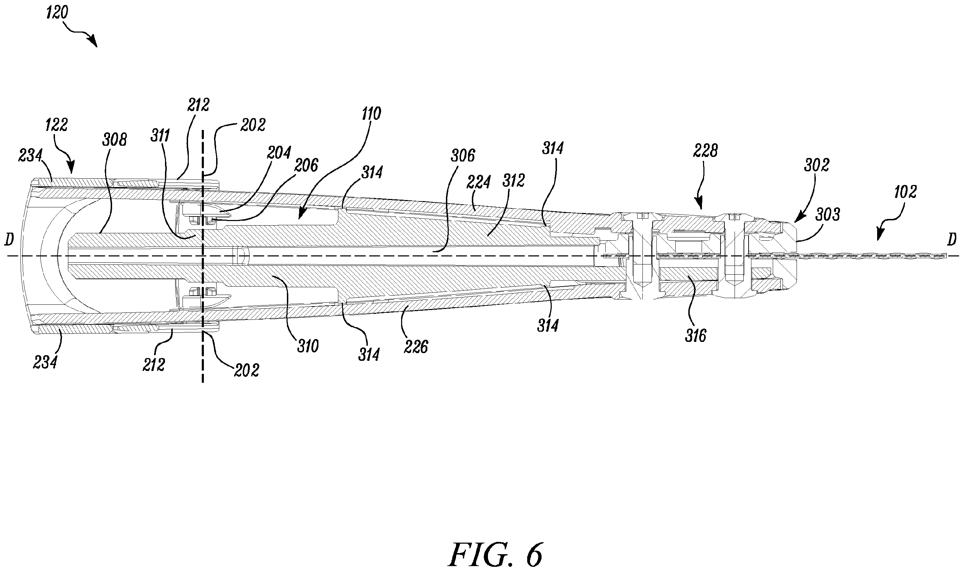

FIGS. **5** and **6** illustrate side and top sectional views of the cover member **120,** according to an embodiment of the present invention. The first connecting portion **110** includes a channel **306** extending along its length. The first connecting portion **110** includes an engaging portion **308** and an intermediate portion **310.** The engaging portion **308** includes the recess **112** on an outer surface. The intermediate portion **310** may be wider than the engaging portion **308** with a stepped portion **311** between the engaging portion **310** and the intermediate portion **310.** In an embodiment, the engaging portion **308** may be at least partly received within the end member **128** of the second connecting portion **114** (illustrated in FIG. **1****).** The stepped portion **311** may engage with the end member **128** to prevent further insertion of the first connecting portion **110.** The first connecting portion **110** further includes a wide portion **312** adjacent to the intermediate portion **310.** The wide portion **312** may have the largest width of the first connecting potion **110.** The wide portion **312** may substantially conform to shapes of the first and the second portions **224, 226** of the cover member **120** along its length. Further, wide portion **312** includes gripping portions **314** that may engage with inner surfaces of the first and the second portions **224, 226.** The gripping portions **314** may detachably engage the first connecting portion **110** with the cover member **120.** In an alternate embodiment, the first connecting portion **110** may be integral with the cover member **120.**

The first connecting portion **110** further includes an implement attachment portion **316** adjacent to the wide portion **312.** The implement attachment portion **316** may be at least partially enclosed by the extension portion **228** of the cover member **120.** In an embodiment, the working implement **102** may be disposed between the receiving member **302** of the extension portion **228** and the implement attachment portion **316** of the first connecting portion **110** (described in detail with reference to FIGS. **7** and **8****).** As illustrated in FIG. **5****,** the receiving member **302** includes a main body **317** with two apertures **318** and a main opening **319.**

FIGS. **7** and **8** are detailed sectional views of the cover member **120.** The first portion **224** of the cover member **120** includes the first indentation **230** and the second indentation **320** on opposite sides in the extension portion **228.** The first indentation **230** includes two apertures **240** that receive the two bushings **301.** Similarly, the second indentation **320** includes two apertures **321** that receive two fasteners **322.** The implement attachment portion **316** of the first connecting portion **110** includes two apertures **324** that may be aligned with the apertures **240.** The working implement **102** also include apertures **326** that may be aligned with the apertures **240.** The apertures **318** of the receiving member **302** may also be aligned with the apertures **240.** The bushings **301** extend through the apertures **240, 324, 326** and **318** of the first indentation **230,** the implement attachment portion **316,** the working implement **102** and the receiving member **302,** respectively. The fasteners **322** extend through the apertures **321** of the second indentation **318** and into the bushings **301.**

The main body **317** of the receiving member **302** may engage with the working implement **102** and the first portion **224** of the cover member **120** on both sides of the main opening **319.** Further, as illustrated in FIG. **8****,** the implement attachment portion **316** of the first connecting portion **110** includes a protruding region **330** that projects towards the working implement **102.** Thus, the working implement **102** is disposed between the main body **317** of the receiving member **302** and the implement attachment portion **316.** Further, the implement attachment portion **316** is at least partly enclosed by the first portion **224** in the extension portion **228** of the cover member **120.** The fasteners **322** and the bushings **301** together attach the working implement **102** to the implement attachment portion **316,** the main body **317** of the receiving member **302** and the first portion **224** of the cover member **120.** The working implement **102** may therefore be securely attached to the first connecting portion **110** and the cover member **120.** The receiving member **302** may prevent any undesired lateral movement of the working implement **102** during usage. The protruding region **330** of the first connecting portion **110** may also reduce any lateral movement of the working implement **102.** Further, as illustrated in FIG. **8****,** the end regions **238** of the lateral portions **234** may facilitate detachment of the connecting portions **210** from the projections **231** since the end regions **238** are inclined away from the outer surface **236** of the cover member **120**

An exemplary operation of the tool **100** will now be described with reference to FIGS. **1****,** **9** and **10****.** A user may require the handle **104** as an extension handle for using the working implement **102.** The first connecting portion **110** and the second connecting portion **114** may be aligned, as illustrated in FIG. **1****.** The safety member **122** may be in the open position. The first connecting portion **110** may be then inserted along the sliding direction **S** (shown in FIG. **1****)** into the second connecting member **114,** as illustrated in FIG. **2****.** The actuating member **118** may be then rotated in the closing direction such that the locking member **116** may engage with the recess **112** of the first connecting portion **110** (shown in FIG. **1****).** The first connecting portion **110** and the second connecting portion **114** may be then coupled to each other. The safety member **122** may be then pivoted to the closed position about the pivots points **202** and the connecting portions **210** of the safety member **122** detachably coupled with the projections **231** of the cover member **120.** Hence, the working implement **102** may be used using the handle **104.**

To detach the handle **104** from the cover member **120,** the reverse operation may be executed. Firstly, the connecting portions **210** may be detached from the projections **231.** The end regions **238** of the lateral portions **234** may facilitate detachment of the connecting portions **210** from the projections **231** since the end regions **238** are inclined away from the outer surface **238** of the cover member **120** (shown clearly in FIG. **8****).** The safety member **122** may be then moved to the open position. The actuating member **118** may be then rotated in an opening direction to disengage the locking member **116** from the recess **112** of the first connecting portion **110.** The second connecting portion **114** may be then detached from the first connecting portion **110.** The handle **104** along with the second connecting portion **114** may be then moved away from the cover member **120.** A user may then use the working implement **102** using the cover member **120** as the short handle.

The working implement **102** may be attached to the first connecting portion **110** by inserting a portion of the working implement **102** into the extension portion **228** of the cover member **120.** The bushings **301** and the fasteners **322** are the inserted and retain the working implement **102** to the implement attachment portion **316** of the first connecting portion **110,** the receiving member **302,** and the first portion **224** of the cover member **120.** The working implement **102** may be easily detached from the first connecting portion **110** by removing the bushings **301** and the fasteners **322,** and sliding the working implement **102** out of the extension portion **228.** In an embodiment, multiple working implements (not shown) may be exchangeably coupled to the first connecting portion **110.** The multiple working implements may be, for example, but not limited to, trowels, hoes, rakes, sickles, weeders, grubbers, tillers, or the like.

The cover member **120** may be configured as a short handle. In an embodiment, the first portion **224** and the second portion **226** of the cover member **120** may be configured to facilitate grasping by a user. Further, the protruding portion **304** of the cover member **120** may also facilitate gripping and substantially prevent slipping of a user's hand off the cover member **120.** Since the cover member **120** may be configured as a short handle, a separate short handle with a coupler may not be required. Further, the cover member **120** may be used exchangeably with various types of working implements. Each of the working implements may also not require a separate coupler. Therefore, a user may not be required to procure separate short handles, and working implements with couplers. Consequently, the cover member **120** may reduce cost from the perspective of both a user and a manufacturer. The cover member **120** may also simplify design and/or manufacturing. Further, a user may not have to repeatedly replace the separate short handle with the handle **104.** A user may have to just detach the handle **104** from the cover member **120** in order to user the cover member **120** as the short handle. This may be more convenient for the user.

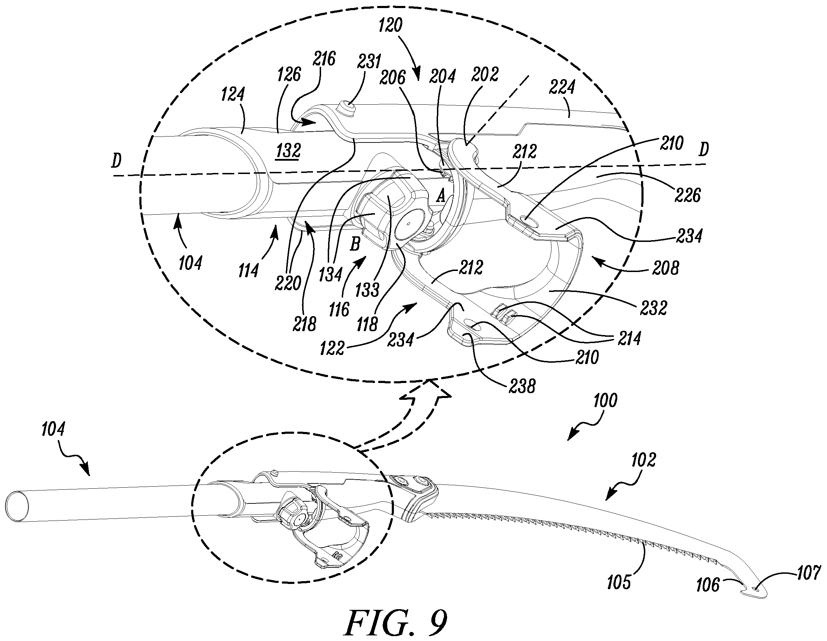

The cover member **120** may also not interfere with the coupling and detachment of the second connecting portion **114** to the first connecting portion **110** due to the first and the second openings **216, 218.** The first opening **216** may enable easy movement of the second connecting portion **114** relative to the first connecting portion **110** along the sliding direction S. The second opening **218** may allow easy access to the actuating member **118** once the first connecting portion **110** is received within the second connecting portion **114,** as illustrated in FIG. **9****.** Therefore, the actuating member **118** may be easily rotated either in the opening direction or the closing direction.

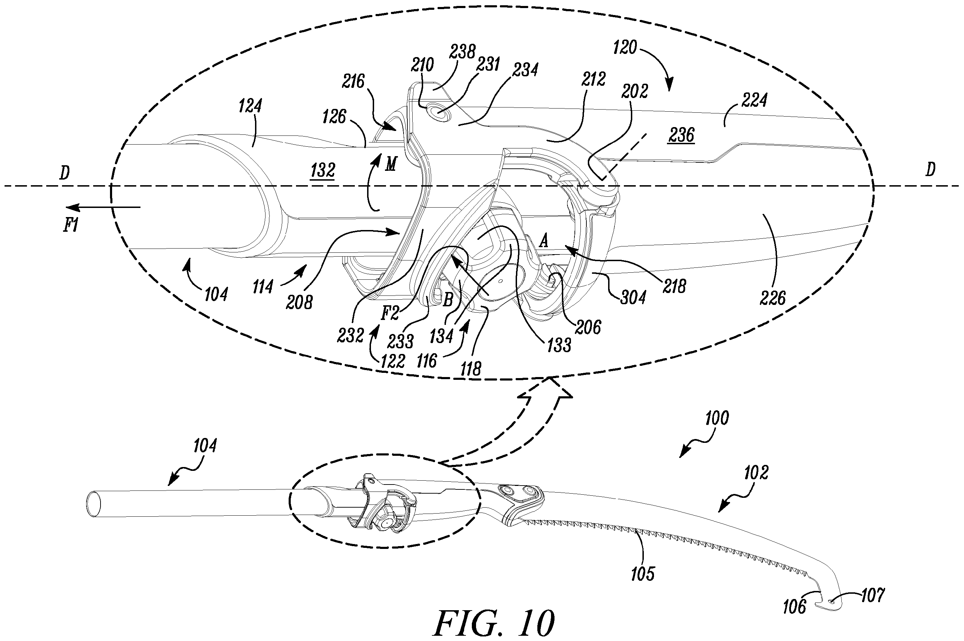

The body **208** of the safety member **122** in the closed position (as illustrated in FIG. **10****)** may be located towards the handle side **B** of the actuating member **118.** In the closed position, the safety member **122** may be prevented from pivoting because of the detachable connection between the connecting portions **210** and the projections **231.** The body **208** of the safety member **122** may at least party enclose the sleeve member **124** of the second connecting portion **114** proximate to the handle side **B** of the actuating member **118.** In an embodiment, the extended region **233** of the middle portion **232** of the body **208** may be shaped to conform at least partly to an outer surface of the actuating member **118.** In an embodiment, the extended region **233** may contact at least one of the extensions **134** of the actuating member **118.** Further, the protruding portion **304** of the cover member **120** is proximate to the working implement side **A** of the actuating member **118.**

During operation, the actuating member **118** may tend to come in contact with branches or other obstacles. Such obstacles may tend to rotate the actuating member **118** in the opening direction. The safety member **122** may minimise any undesired contact of the actuating member **118** with such obstacles since the body **208** of the safety member **122** at least partly encloses the sleeve member **124** of the second connecting portion **114** towards the handle side **B** of the actuating member **118.** However, in case such obstacles contact the actuating member **118,** the extended region **233** may prevent such accidental rotation of the actuating member **118** in the opening direction as the extended region **233** conforms to the outer shape of the actuating member **118.** In some cases, the actuating member **118** may accidentally rotate in the opening direction, and the locking member **116** may get at least partly disengaged from the recess **112.** This may loosen the coupling between the first connecting portion **110** and the second connecting portion **114.** Since the handle **104** may be manipulated by a user during an operation, the handle **104** along with the second connecting portion **114** may tend to move away from the first connecting portion **110.** However, the safety member **122** may prevent such accidental detachment of the second connecting portion **114** and the handle **104** as the body **208** at least partly encloses the sleeve member **124** of the second connecting portion **114** proximate to the handle side **B** of the actuating member **118.** This may prevent the cover member **120** and the working implement **102** to get completely detached. Thus, the cover member **120** and the working implement **102** may not get stuck in an elevated position or may not fall on the ground, thereby sustaining damage or causing harm to a user. In case, the coupling between the first connecting portion **110** and the second connecting portion **114** may get loosened during operation, the safety member **122** enables a user to lower the tool **100** safely and tighten the actuating member **118** again.

In an embodiment, the pivot points **202** may be located vertically between the first connecting portion **110** and the actuating member **118.** In particular, the pivots points **202** may be closer to a central axis **D** of the first connecting portion **110** than the actuating member **118.** In an embodiment, central axis **D** may be co-axial with a central axis of the handle **104** when the handle **104** is coupled to the cover member **120** (as illustrated in FIG. **10****).** A force **F1** may act on the handle **104,** the force **F1** tending to detach the handle **104** and the second coupling portion **114** from the cover member **120** and the first coupling portion **110.** The actuating member **118** may also exert a force **F2** on the body **208** of the safety member **122.** Since, the pivot points **202** may be closer to the central axis **D,** a moment **M** due to the force **F2** may tend to rotate the safety member **122** about the pivot points **202** towards the closed position. Therefore, the force **F1** on the handle **104** may tend to reinforce the safety member **122** in the closed position, thereby preventing any accidental detachment of the handle **104** and the second coupling portion **114.** The protrusions **214** (illustrated in FIG. **1****)** of the safety member **122** may prevent any pivoting of the safety member **122** beyond the closed position due to engagement with the straight edges **220** of the cover member **120.** The protrusions **214** may therefore reduce a force exerted on the detachable connection between the connecting portions **210** and the projections **231** due to the moment **M,** thereby minimizing any damage to the connecting portions **210** and/or the projections **231.** Further, in case, the connecting portions **210** and the projections **231** get detached due to the moment **M,** the protrusions **214** may prevent any pivoting of the safety member **122** beyond the closed position. Thus, the safety member **122** may continue to prevent detachment of the handle **104** and the second connecting portion **110.**

The protruding portion **304** may also substantially prevent unintentional contact with the actuating member **118** from the working implement side **A** of the actuating member **118.** This may avoid accidental rotation of the actuating member **118** in the opening direction.

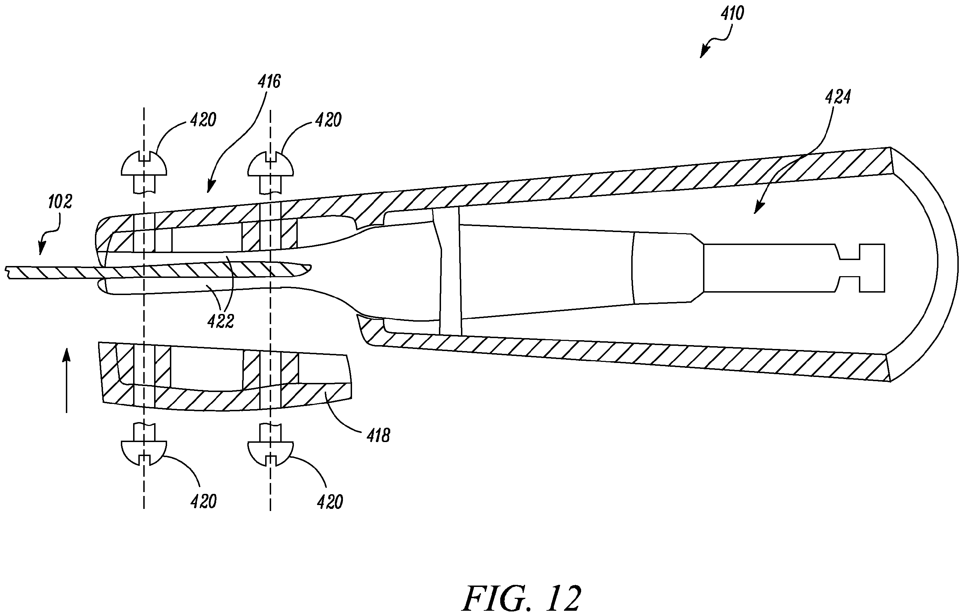

FIG. **11** illustrates the tool **400,** according to another embodiment of the present invention. As illustrated in FIG. **10****,** the safety member **402** is embodied as a strap. The actuating member **404** may at least partly project from the outer surface **405** of the handle **104.** The safety member **402** may be detachably connected to the cover member **410.** Alternatively, the safety member **402** may be a Velcro strap. The safety member **402** may at least partly enclose the handle **104** proximate to the handle side **B** of the actuating member **404.** The handle **104** is attached to the second connecting portion **412.** Further, the second opening **414** may enable access to the actuating member **404.** The extension portion **416** of the cover member **410** may include a closing member **418.** The closing member **418** may be detachably coupled to the extension portion **416** by fasteners **420,** as will be described with reference to FIG. **12****.**

FIG. **12** illustrates the cover member **410** with the closing member **418** detachably connected to the extension portion **416** of the cover member **410** by fasteners **420.** The fasteners **420** may pass the closing member **418,** the extension portion **416,** the working implement **102** and the implement attachment portion **422** of the first connecting portion **424.** With the closing member **418** removed the working implement **102** can much more easily brought into the correct position before being fixed to the extension portion **416.**

In the drawings and specification, there have been disclosed preferred embodiments and examples of the invention and, although specific terms are employed, they are used in a generic and descriptive sense only and not for the purpose of limitation of the scope of the invention being set forth in the following claims.

### Parts List:

- 100, 400: Tool
- 102: Working Implement
- 104: Handle
- 105: Cutting Edge
- 106: Hooked End
- 107: Eyelet
- 108: Coupling Apparatus
- 110, 424: First Connecting Portion
- 112: Recess
- 114, 412: Second Connecting Portion
- 116: Locking Member
- 118, 404: Actuating Member
- 120, 410: Cover Member
- 122, 402: Safety Member
- 124: Sleeve Member of the Second Connecting Portion
- 126: Open Portion of the Sleeve Region
- 128: End Member of the Second Connecting Portion
- 130: Projecting Region of the Sleeve Member
- 132: Outer Surface of the Sleeve Member
- 133: Inner Portion of the Actuating Member
- 134: Extensions of the Actuating Member
- A: Working Implement Side of the Actuating Member
- B: Handle Side of the Actuating Implement
- 202: Pivot Points
- 204: Pivot Portions
- 206: Fastening Portions
- 208: Body of the Safety Member
- 210: Connecting Portions of the Safety Member
- 212: Two Arms of the Safety Member
- 214: Protrusions of the Safety Member
- 216: First Opening
- 218: Second Opening
- S: Sliding Direction
- 220: Straight Edges
- 224: First Portion
- 226: Second Portion
- 228, 416: Extension Portion of the Cover Member
- 230: First Indentation
- 231: Projections of the Cover Member
- 232: Middle Portion of the Body
- 233: Extended Region of the Middle Portion
- 234: Lateral Portions of the Body
- 236: Outer Surface of the Cover Member
- 238: End Regions of the Lateral Portions
- 240: Apertures
- 301: Bushings
- 302: Receiving Member
- 303: Edge of the Receiving Member
- 304: Protruding Portion
- 306: Channel of the First Connecting Portion
- 308: Engaging Portion of the First Connecting Portion
- 310: Intermediate Portion of the First Connecting Portion
- 311: Stepped Portion of the First Connecting Portion
- 312: Wide Portion of the First Connecting Portion
- 314: Gripping Portions of the Wide Portion
- 316, 422: Implement Attachment Portion
- 317: Main Body of the Receiving Member
- 318: Apertures of the Receiving Member
- 319: Main Opening of the Receiving Member
- 320: Second Indentation
- 321: Apertures of the Second Indentation
- 322, 420: Fasteners
- 324: Apertures of the Implement Attachment Portion
- 326: Apertures of the Working Implement
- 330: Protruding Region of the First Connecting Portion
- D: Central Axis of the First Connecting Portion
- F1: Force on the Handle
- F2: Force on the Safety Member
- M: Moment
- 405: Outer Surface of the Handle
- 418: Closing Member

## Claims

1. A tool **(100, 400)** comprising:
a working implement **(102)** and a handle **(104);** and
a coupling apparatus **(108)** configured to detachably couple the working implement to the handle, the coupling apparatus comprising:
a first connecting portion **(110, 424)** attached to the working implement, the first connecting portion comprising a recess **(112);**
a second connecting portion **(114)** attached to the handle **(104),** the second connecting portion **(114)** being configured to at least partly receive the first connecting portion **(110, 424);** and
a locking member **(116)** disposed on the second connecting portion, the locking member being configured to engage with the recess of the first connecting portion to detachably couple the handle to the working implement, wherein the locking member comprises an actuating member **(118, 404),** the actuating member at least partly projecting from an outer surface **(132 ,405)** of the handle (104) and/or the second connecting portion **(114);**
a cover member **(120, 410)** configured to at least partly enclose the first connecting portion proximate to the recess, the cover member further configured to at least partly enclose the handle (104) and/or the second connecting portion **(114)** when the handle (104) is detachably coupled to the working implement **(102),**
**characterized in that**
the cover member (120, 410) includes a first opening (216) and a second opening (218), with the first opening (216) being an end opening while the second opening (218) being a lateral opening adjacent to the first opening,
with the first and second opening (216, 218) allowing the cover member (120, 410) not to interfere with the coupling and detachment of the second connecting portion.

2. A tool according to claim 1, wherein the second opening (218) is configured to allow access to the actuating member **(118, 404).**

3. A tool according to claims 1 or 2, wherein the cover member further comprises a safety member **(122, 402),** the safety member being configured to at least partly enclose the handle and/or the second connecting portion proximate to a handle side **(B)** of the actuating member, wherein the handle side of the actuating member is opposite to that side **(A)** of the actuating member facing the working implement.

4. A tool according to claim 3, wherein the safety member **(122)** comprises a body **(208)** and at least one connecting portion **(210),** the at least one connecting portion being configured to be detachably connected to the cover member, and the body being configured to at least partly enclose the handle and/or the second connecting portion proximate to the handle side of the actuating member when the at least one connecting portion is detachably connected to the cover member.

5. A tool according to claim 4, wherein the at least one connecting portion **(210)** comprises one of at least one aperture, at least one hook, or at least one rib configured to detachably engage with one of a projection **(231),** an aperture, or a groove of the cover member.

6. A tool according to claim 4, wherein the body is shaped to conform at least partly to an outer surface of the actuating member.

7. A tool according to claim 4, wherein the safety member further comprises a strap, the strap being configured to detachably connect the body to the cover member.

8. A tool according to claim 3, wherein the safety member **(402)** is a strap.

9. A tool according to claims 3-7, wherein the safety member is pivotably connected to the cover member at one or more pivot points **(202).**

10. A tool according to any of the preceding claims, wherein the cover member further comprises a protruding portion **(304),** the protruding portion being proximate to a side **(A)** of the actuating member facing the working implement.

11. A tool according to any of the preceding claim, wherein the cover member is configured as a short handle.

12. A tool according to any of the preceding claims, the first connecting portion further comprises a implement attachment portion **(316, 422),** the implement attachment portion being attached to the working implement, and wherein the cover member further comprises an extension portion **(228, 416),** the extension portion being configured to partially enclose the implement attachment portion,

13. A tool according to claim 12, wherein a closing member **(418)** is detachably coupled to the extension portion of the cover member.

14. A tool according to any of the preceding claims, wherein the first connecting portion further comprises gripping portions **(314),** the gripping portions being configured to detachably engage with the cover member.

15. A tool according to any of the preceding claims, wherein the cover member is integral with the first connecting portion.

## Patentansprüche

1. Werkzeug (100, 400), umfassend:
ein Arbeitsgerät (102) und einen Griff (104); und eine Kopplungsvorrichtung (108), die zum lösbaren Koppeln des Arbeitsgerätes mit dem Griff konfiguriert ist, wobei die Kopplungsvorrichtung umfasst:
einen ersten Verbindungsabschnitt (110, 424), der am Arbeitsgerät befestigt ist, wobei der erste Verbindungsabschnitt eine Aussparung (112) aufweist;
einen zweiten Verbindungsabschnitt (114), der an dem Griff (104) befestigt ist, wobei der zweite Verbindungsabschnitt (114) konfiguriert ist, um mindestens teilweise den ersten Verbindungsabschnitt (110, 424) aufzunehmen;
ein Verriegelungselement (116), das am zweiten Verbindungsabschnitt angeordnet ist, wobei das Verriegelungselement zum Eingreifen in die Aussparung des ersten Verbindungsabschnitts zum lösbaren Koppeln des Griffs mit dem Arbeitsgerät konfiguriert ist, wobei das Verriegelungselement ein Betätigungselement (118, 404) umfasst, wobei das Betätigungselement mindestens teilweise von einer Außenoberfläche (132, 405) des Griffs (104) und/oder dem zweiten Verbindungsabschnitt (114) vorsteht;
eine Bedeckung (120, 410), die zum mindestens teilweise Umschließen des ersten Verbindungsabschnitts in Nähe der Aussparung konfiguriert ist, wobei die Bedeckung ferner zum mindestens teilweise Umschließen des Griffs (104) und/oder des zweiten Verbindungsabschnitts (114) konfiguriert ist, wenn der Griff (104) lösbar mit dem Arbeitsgerät (102) gekoppelt ist, **dadurch gekennzeichnet, dass**
die Bedeckung (120, 410) eine erste Öffnung (216) und eine zweite Öffnung (218) aufweist, wobei die erste Öffnung (216) eine Endöffnung ist, während die zweite Öffnung (218) eine laterale Öffnung benachbart der ersten Öffnung ist, wobei die erste und die zweite Öffnung (216, 218) der Bedeckung (120, 410) ermöglichen, die Kopplung und Freigabe des zweiten Verbindungsabschnitts nicht zu behindern.

2. Werkzeug nach Anspruch 1, wobei die zweite Öffnung (218) zum Ermöglichen des Zugangs zum Betätigungselement (118, 404) konfiguriert ist.

3. Werkzeug nach einem der Ansprüche 1 oder 2, wobei die Bedeckung ferner eine Sicherheitselement (122, 402) umfasst, wobei das Sicherheitselement zum mindestens teilweise Umschließen des Griffs und/oder des zweiten Verbindungsabschnitts in Nähe der Griffseite (B) des Betätigungselements konfiguriert ist, wobei die Griffseite des Betätigungselements gegenüber dieser Seite (A) des Betätigungselements, das zum Arbeitsgerät weist, angeordnet ist.

4. Werkzeug nach Anspruch 3, wobei das Sicherheitselement (122) einen Körper (208) und mindestens einen Verbindungsabschnitt (210) umfasst, wobei der mindestens eine Verbindungsabschnitt zum lösbaren Verbinden mit der Bedeckung konfiguriert ist und der Körper konfiguriert ist, um mindestens teilweise den Griff und/oder den zweiten Verbindungsabschnitt in Nähe der Griffseite des Betätigungselements zu umschließen, wenn der mindestens eine Verbindungsabschnitt lösbar mit der Bedeckung verbunden ist.

5. Werkzeug nach Anspruch 4, wobei mindestens ein Verbindungsabschnitt (210) eines von mindestens einer Durchbrechung, mindestens einem Haken oder mindestens einer Rippe umfasst, die zum lösbaren Eingreifen in einen Vorsprung (231), eine Durchbrechung oder eine Nut der Bedeckung konfiguriert sind.

6. Werkzeug nach Anspruch 4, wobei der Körper so geformt ist, dass er sich mindestens teilweise an eine Außenoberfläche des Betätigungselements anpasst.

7. Werkzeug nach Anspruch 4, wobei das Sicherheitselement ferner einen Riemen umfasst, wobei der Riemen zum lösbaren Verbinden von Körper und Bedeckung konfiguriert ist.

8. Werkzeug nach Anspruch 3, wobei das Sicherheitselement (402) ein Riemen ist.

9. Werkzeug nach einem der Ansprüche 3 bis 7, wobei das Sicherheitselement an einem oder mehreren Schwenkpunkten (202) mit der Bedeckung verbunden ist.

10. Werkzeug nach einem der vorhergehenden Ansprüche, wobei die Bedeckung ferner einen vorstehenden Abschnitt (304) umfasst, wobei der vorstehende Abschnitt in der Nähe einer Seite (A) des Betätigungselements angeordnet ist, das zum Arbeitsgerät weist.

11. Werkzeug nach einem der vorhergehenden Ansprüche, wobei die Bedeckung als kurzer Griff konfiguriert ist.

12. Werkzeug nach einem der vorhergehenden Ansprüche, wobei der erste Verbindungsabschnitt ferner einen Gerätebefestigungsabschnitt (316, 422) umfasst, wobei der Gerätebefestigungsabschnitt an dem Arbeitsgerät befestigt ist, und wobei die Bedeckung ferner einen Verlängerungsabschnitt (228, 416) umfasst, wobei der Verlängerungsabschnitt zum teilweise Umschließen des Gerätebefestigungsabschnitts konfiguriert ist.

13. Werkzeug nach Anspruch 12, wobei ein Schließelement (418) lösbar mit dem Verlängerungsabschnitt der Bedeckung gekoppelt ist.

14. Werkzeug nach einem der vorhergehenden Ansprüche, wobei der erste Verbindungsabschnitt ferner Greifabschnitte (314) umfasst, wobei die Greifabschnitte zum lösbaren Eingreifen in die Bedeckung konfiguriert sind.

15. Werkzeug nach einem der vorhergehenden Ansprüche, wobei die Bedeckung einstückig mit dem ersten Verbindungsabschnitt ausgebildet ist.

## Revendications

1. Outil (100, 400) comprenant :
un instrument de travail (102) et un manche (104) ; et
un appareil d'accouplement (108) configuré pour accoupler, de manière séparable, l'instrument de travail au manche, l'appareil d'accouplement comprenant :
une première partie de raccordement (110, 424) fixée à l'instrument de travail, la première partie de raccordement comprenant un évidement (112) ;
une seconde partie de raccordement (114) fixée au manche (104), la seconde partie de raccordement (114) étant configurée pour recevoir au moins partiellement la première partie de raccordement (110, 424) ; et
un élément de verrouillage (116) disposé sur la seconde partie de raccordement, l'élément de verrouillage étant configuré pour venir en prise avec l'évidement de la première partie de raccordement de façon à accoupler, de manière séparable, le manche à l'instrument de travail, l'élément de verrouillage comprenant un élément d'actionnement (118, 404), l'élément d'actionnement faisant au moins partiellement saillie à partir d'une surface extérieure (132, 405) du manche (104) et/ou de la seconde partie de raccordement (114) ;
un élément couvrant (120, 410) configuré pour recouvrir au moins partiellement la première partie de raccordement à proximité de l'évidement, l'élément couvrant étant en outre configuré pour recouvrir au moins partiellement le manche (104) et/ou la seconde partie de raccordement (114) lorsque le manche (104) est accouplé, de manière séparable, à l'instrument de travail (102),
**caractérisé en ce que**
l'élément couvrant (120, 410) comprend une première ouverture (216) et une seconde ouverture (218), la première ouverture (216) étant une ouverture d'extrémité tandis que la seconde ouverture (218) est une ouverture latérale adjacente à la première ouverture,
les première et seconde ouvertures (216, 218) permettant à l'élément couvrant (120, 410) de ne pas causer d'obstruction lors de l'accouplement et de la séparation de la seconde partie de raccordement.

2. Outil selon la revendication 1, dans lequel la seconde ouverture (218) est configurée pour permettre l'accès à l'élément d'actionnement (118, 404).

3. Outil selon la revendication 1 ou 2, dans lequel l'élément couvrant comprend en outre un élément de sécurité (122, 402), l'élément de sécurité étant configuré pour recouvrir au moins partiellement le manche et/ou la seconde partie de raccordement à proximité d'un côté manche (B) de l'élément d'actionnement, dans lequel le côté manche de l'élément d'actionnement est opposé au côté (A) de l'élément d'actionnement faisant face à l'instrument de travail.

4. Outil selon la revendication 3, dans lequel l'élément de sécurité (122) comprend un corps (208) et au moins une partie de raccordement (210), la ou les parties de raccordement étant configurées pour être raccordées, de manière séparable, à l'élément couvrant, et le corps étant configuré pour recouvrir au moins partiellement le manche et/ou la seconde partie de raccordement à proximité du côté manche de l'élément d'actionnement lorsque la ou les parties de raccordement sont raccordées, de manière séparable, à l'élément couvrant.

5. Outil selon la revendication 4, dans lequel la ou les parties de raccordement (210) comprennent au moins un orifice, au moins un crochet ou au moins une nervure configuré(e) pour venir en prise, de manière séparable, avec une protubérance (231), un orifice ou une rainure de l'élément couvrant.

6. Outil selon la revendication 4, dans lequel le corps est doté d'une forme prévue pour correspondre au moins partiellement à une surface extérieure de l'élément d'actionnement.

7. Outil selon la revendication 4, dans lequel l'élément de sécurité comprend en outre une sangle, la sangle étant configurée pour se raccorder, de manière séparable, au corps de l'élément couvrant.

8. Outil selon la revendication 3, dans lequel l'élément de sécurité (402) est une sangle.

9. Outil selon les revendications 3 à 7, dans lequel l'élément de sécurité est raccordé à pivotement à l'élément couvrant au niveau d'un ou plusieurs points de pivotement (202).

10. Outil selon l'une quelconque des revendications précédentes, dans lequel l'élément couvrant comprend en outre une partie saillante (304), la partie saillante se trouvant à proximité d'un côté (A) de l'élément d'actionnement faisant face à l'instrument de travail.

11. Outil selon l'une quelconque des revendications précédentes, dans lequel l'élément couvrant est configuré sous la forme d'un manche court.

12. Outil selon l'une quelconque des revendications précédentes, la première partie de raccordement comprenant en outre une partie de fixation d'instrument (316, 422), la partie de fixation d'instrument étant fixée à l'instrument de travail, et dans lequel l'élément couvrant comprend en outre une partie de prolongement (228, 416), la partie de prolongement étant configurée pour recouvrir partiellement la partie de fixation d'instrument.

13. Outil selon la revendication 12, dans lequel un élément de fermeture (418) est accouplé, de manière séparable, à la partie de prolongement de l'élément couvrant.

14. Outil selon l'une quelconque des revendications précédentes, dans lequel la première partie de raccordement comprend en outre des parties de retenue (314), les parties de retenue étant configurées pour venir en prise, de manière séparable, avec l'élément couvrant.

15. Outil selon l'une quelconque des revendications précédentes, dans lequel l'élément couvrant fait partie intégrante de la première partie de raccordement.
